(19) Europäisches Patentamt
European Patent Office
Office européen des brevets

(11) Veröffentlichungsnummer : **0 026 361**
**B1**

(12) # EUROPÄISCHE PATENTSCHRIFT

(45) Veröffentlichungstag der Patentschrift : **01.06.83**

(51) Int. Cl.³ : **C 07 C145/02**, A 01 N 47/12

(21) Anmeldenummer : **80105354.7**

(22) Anmeldetag : **08.09.80**

(54) **Sulfenylierte Acylurethane, Verfahren zu ihrer Herstellung und ihre mikrobizide Verwendung.**

(30) Priorität : **20.09.79 DE 2938111**

(43) Veröffentlichungstag der Anmeldung : **08.04.81 Patentblatt 81/14**

(45) Bekanntmachung des Hinweises auf die Patenterteilung : **01.06.83 Patentblatt 83/22**

(84) Benannte Vertragsstaaten : **BE CH DE FR GB IT LI NL SE**

(56) Entgegenhaltungen :
**DE B 1 543 614**
**US A 3 642 863**

(73) Patentinhaber : **BAYER AG**
**Zentralbereich Patente, Marken und Lizenzen**
**D-5090 Leverkusen 1, Bayerwerk (DE)**

(72) Erfinder : **Kühle, Engelbert, Dr.**
**von Bodelschwingh-Strasse 42**
**D-5060 Bergisch Gladbach 2 (DE)**
Erfinder : **Paulus, Wilfried, Dr.**
**Deswatinesstrasse 90**
**D-4150 Krefeld (DE)**
Erfinder : **Genth, Hermann, Dr.**
**Am Heckerhof 60**
**D-4150 Krefeld (DE)**
Erfinder : **Brandes, Wilhelm, Dr.**
**Eichendorffstrasse 3**
**D-5653 Leichlingen (DE)**

**EP 0 026 361 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Sulfenylierte Acylurethane, Verfahren zu ihrer Herstellung und ihre mikrobizide Verwendung

Die Erfindung betrifft neue sulfenylierte Acylurethane, ein Verfahren zu ihrer Herstellung und ihre mikrobizide Verwendung.

Aus der DE-B 15 43 614 sind N(Trihalogenmethylthio)-N-trifluormethyl-amino-benzamide bekannt, die im besonderen eine Wirkung gegen phytopathogene Pilze haben.

Es wurden neue sulfenylierte Acylurethane der Formel

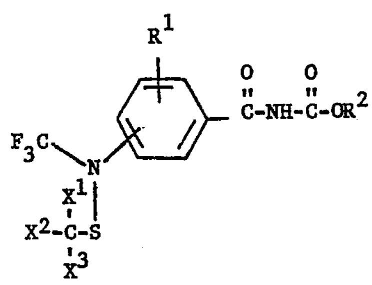

(I)

worin

$R^1$ Wasserstoff, Halogen, Nitro, gegebenenfalls durch Sauerstoff, Schwefel oder N-Alkyl unterbrochenes Alkyl, Alkoxy oder Halogenmethyl bedeutet,

$R^2$ gegebenenfalls durch Sauerstoff, Schwefel oder N-Alkyl unterbrochenes Alkyl, Alkenyl, Alkinyl, Cycloalkyl oder Aralkyl bedeutet,

$X^1$, $X^2$ und $X^3$ gleich oder verschieden sind und Halogen bedeuten,

gefunden.

Halogen kann erfindungsgemäß Fluor, Chlor, Brom oder Jod bedeuten. Bevorzugt kann Halogen Fluor oder Chlor sein. Halogenmethyl kann bevorzugt Trifluormethyl oder Trichlormethyl sein.

Alkyl kann erfindungsgemäß ein geradkettiger oder verzweigter Kohlenwasserstoffrest mit 1 bis 6 Kohlenstoffatomen bedeuten, der gegebenenfalls durch ein Heteroatom (O, S oder N-Alkyl) unterbrochen sein kann. Bevorzugt sei ein Niederalkylrest mit bis zu etwa 6 Kohlenstoffatomen genannt. Beispiele für Alkyl sind Methyl, Ethyl, Propyl, Iso-propyl, Butyl, Iso-butyl, Pentyl, Iso-pentyl, Hexyl, Iso-hexyl, Dimethylaminoethyl, 2-Methoxiethyl und 2-Ethylmercaptoethyl.

Alkenyl kann erfindungsgemäß ein geradkettiger oder verzweigter Kohlenwasserstoffrest mit 2 bis 12 Kohlenstoffatomen bedeuten. Bevorzugt sei ein Niederalkenylrest mit bis zu etwa 6 Kohlenstoffatomen genannt. Beispiele für Alkenyl sind Allyl, Propenyl, Iso-propenyl, Butenyl, Iso-butenyl, Pentenyl, Isopentenyl, Hexenyl und Iso-hexenyl.

Alkinyl kann erfindungsgemäß ein geradkettiger oder verzweigter Kohlenwasserstoffrest mit 2 bis 12 Kohlenstoffatomen bedeuten. Bevorzugt sei ein Niederalkinylrest mit bis zu etwa 6 Kohlenstoffatomen genannt. Beispiele für Alkinyl sind Ethinyl, Propinyl, Iso-propinyl, Butinyl, Iso-butinyl, Pentinyl, Isopentinyl, Hexinyl und Iso-hexinyl.

Cycloalkyl kann erfindungsgemäß ein cyclischer Kohlenwasserstoffrest mit 5 bis 8 Kohlenstoffatomen bedeuten. Bevorzugt sind der Cyclopentyl- und der Cyclohexylrest.

Aralkyl kann erfindungsgemäß im aliphatischen Teil einen geradkettigen oder verzweigten Kohlenwasserstoffrest mit bis zu 6 Kohlenstoffatomen und im aromatischen Teil Phenyl bedeuten. Beispielsweise sei der Benzylrest genannt.

Alkoxy kann erfindungsgemäß von einem geradkettigen oder verzweigten aliphatischen Alkohol mit 1 bis 12 Kohlenstoffatomen abgeleitet sein. Bevorzugt sei der Niederalkoxyrest mit bis zu etwa 6 Kohlenstoffatomen genannt. Beispiele für Alkoxy sind Methoxy, Ethoxy, Propoxy, Iso-propoxy, Butoxy, Iso-butoxy, Pentoxy, Iso-pentoxy, Hexoxy und Iso-hexoxy. Bevorzugtes Alkoxy ist Methoxy.

Bevorzugte erfindungsgemäße neue sulfenylierte Acylurethane sind Verbindungen der Formel

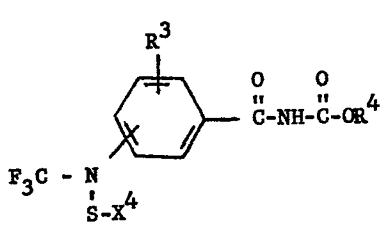

(II)

worin

$R^3$ Wasserstoff, Chlor, Nitro, Niederalkyl, Niederalkoxy oder Trifluormethyl bedeutet,

$R^4$ Niederalkyl, Niederalkenyl oder Benzyl bedeutet und

$X^4$ Trifluormethyl, Trichlormethyl, Fluor-dichlormethyl oder Difluor-chlormethyl bedeutet.

Im einzelnen seien die folgenden neuen sulfenylierten Acylurethane genannt :

2-, 3- oder 4-N(Fluordichlormethylmercapto)N-trifluormethylamino-benzoyl-N'-methylurethan, -N'-ethylurethan, -N'-tert.-butylurethan, -N'-allylurethan, -N'-propargylurethan, -N'-cyclohexylurethan, -N'-benzylurethan, -N'-2-methoxiethylurethan, -N'-2-ethylmercaptoethylurethan, -N'-2-dimethylamino-ethylurethan, 2-N-(Trifluormethylmercapto)N-trifluormethylaminobenzoyl-N'-methylurethan, 2-N(Fluordichlormethylmercapto)N-trifluormethylaminobenzoyl-4-chlor-N'-methylurethan, 2-N(Fluordichlormethylmercapto)-N-trifluormethylamino-5-trifluormethylbenzoyl-N'-methylurethan.

Es wurde außerdem ein Verfahren zur Herstellung von sulfenylierten Acylurethanen gefunden, das dadurch gekennzeichnet ist, daß man Acylisocyanate der Formel

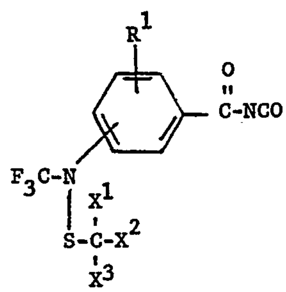

(III)

worin

$R^1$, $X^1$, $X^2$ und $X^3$ die oben angegebene Bedeutung haben,

mit einer Hydroxyverbindung der Formel

$$R^2—OH \quad (IV)$$

worin

$R^2$ die oben angegebene Bedeutung hat,

in Gegenwart eines Verdünnungsmittels umsetzt.

Das erfindungsgemäße Verfahren kann anhand der folgenden Reaktionsgleichung erläutert werden :

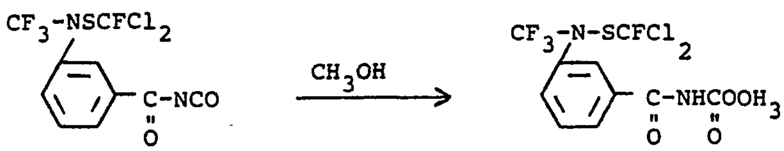


Acylisocyanate der Formel (III) können durch Umsetzung von Carbonsäureamiden der Formel

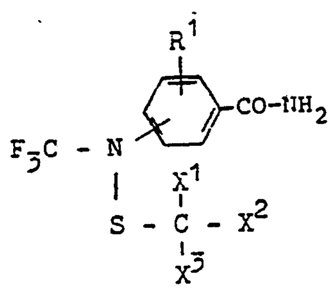

(V)

worin

$R^1$, $X^1$, $X^2$ und $X^3$ die obengenannte Bedeutung haben,

in einem inerten Verdünnungsmittel wie einem Ether, einem Kohlenwasserstoff oder einem Halogenkohlenwasserstoff mit Oxalylchlorid hergestellt werden.

Vorzugsweise seien Acylisoxyanate der Formel

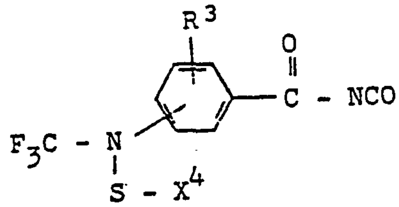

(VI)

worin

$R^3$ und $X^4$ die obengenannte Bedeutung haben,

genannt.

Beispielsweise seien die folgenden Acylisocyanate genannt: 2-, 3- oder 4-N-(Fluordichlormethylmercapto)-N-trifluormethylaminobenzoylisocyanat, 2-N-(Trifluormethylmercapto)-N-trifluormethylamino-benzoylisocyanat, 2-N-(Fluordichlormethylmercapto)N-trifluormethylamino-4-chlorbenzoylisocyanat, 2-N-(Fluordichlormethylmercapto)-N-trifluormethylamino-5-trifluormethylbenzoylisocyanat.

Hydroxyverbindungen für das erfindungsgemäße Verfahren sind an sich bekannt. Vorzugsweise können für das erfindungsgemäße Verfahren Hydroxyverbindungen der Formel

$$R^4—OH \qquad (VII)$$

worin

$R^4$ die obengenannte Bedeutung hat,

eingesetzt werden.

Beispielsweise seien die folgenden Hydroxyverbindungen genannt: Methanol, Ethanol, Isopropanol, tert.-Butanol, Dimethylaminoethanol, 2-Ethylmercaptoethanol, 2-Methoxyethanol, Allylalkohol, Propargylalkohol, Cyclohexanol, Benzylalkohol, 4-Chlorbenzylalkohol und Phenylethanol.

Als Verdünnungsmittel seien alle inerten Lösungsmittel genannt, die unter den Reaktionsbedingungen nicht mit den Reaktanten reagieren. Beispielsweise seinen Ether wie Diethylether oder Dioxan, Kohlenwasserstoffe, wie Toluol, chlorierte Kohlenwasserstoffe, wie Chlorbenzol oder Chloroform, genannt. Es ist auch möglich, die Umsetzung in einem Überschuß der entsprechenden Hydroxyverbindung durchzuführen. Das erfindungsgemäße Verfahren wird im allgemeinen im Temperaturbereich von 0 bis 100, vorzugsweise 20 bis 50 °C, durchgeführt.

Das erfindungsgemäße Verfahren wird im allgemeinen bei Normaldruck durchgeführt; es ist jedoch möglich, das Verfahren bei einem Unter- oder Überdruck durchzuführen.

Die erfindungsgemäßen neuen sulfenylierten Acylurethane sind Verbindungen mit besonders hoher mikrobizider Wirkung. Sie können beispielweise zum Schutz technischer Materialien gegen einen mikrobiellen Abbau oder eine durch Mikroorganismen begingte Änderung der technischen Materialien und zum Schutz von Holz verwendet werden.

Technische Materialien sind z. B. Klebstoffe, Leim, Papiere und Kartone, Textilien, Leder, Holz, Anstrichmittel, Putze und Gebindeinhalte, die durch mikrobielle Einwirkung beschädigt oder zerstört werden können. Die erfindungsgemäßen Wirkstoffe eignen sich besonders zur Herstellung fungizider Anstrich- und Imprägniermittel.

Mikroorganismen, die einen Abbau oder eine Veränderung der technischen Materialien bewirken können, sind beispielsweise Bakterien, Hefen, Pilze und Algen.

Als Bakterien, Hefen, Pilze und Algen seien beispielsweise genannt:

Alternaria tenuis, Aspergillus niger, Chaetomium globosum, Coniophora cerebella, Lentinus tigrinus, Pullularia pullulans, Penicillium glaucum, Staphylococcus aureus, Candida albicans, Trichophyton pedis, Stichococcus bacillaris, Naegeli, Euglena gracilis Klebs, Chlorella pyrenoidosa, Enteromorpha intestinalis.

Die erfindungsgemäßen neuen sulfenlierten Acylurethane haben eine besonders hohe fungizide Wirkung.

Je nach ihrem Anwendungsgebiet können die erfindungsgemäßen neuen sulfenylierten Acylurethane in die üblichen Formulierungen überführt werden, wie Lösungen, Emulsionen, Suspensionen, Pulver, Pasten und Granulate. Diese können in an sich bekannter Weise hergestellt werden, z. B. durch Vermischen der Wirkstoffe mit einem Streckmittel, das aus flüssigem Lösungsmittel und/oder festen Trägerstoffen, gegebenenfalls unter Verwendung von oberflächenaktiven Mitteln, wie Emulgatoren und/oder Dispergiermitteln, wobei beispielsweise im Falle der Benutzung von Wasserstreckmitteln, gegebenenfalls organische Lösungsmittel, als Hilfslösungsmittel verwendet werden können.

Die erfindungsgemäßen Wirkstoffe können in den Formulierungen in Mischungen mit anderen bekannten Wirkstoffen vorliegen. Beispielsweise seien die folgenden Wirkstoffe genannt: Benzimidazolyl-alkylcarbamat, Tetramethyl-thiuram-disulfid, N-Fluordichlormethylthiophthalimid und N,N-Dimethyl-N'-phenyl(N'-fluordichlormethylthio)-sulfamid.

Die Anwendungsform des erfindungsgemäßen mikrobiziden Mittels enthält im allgemeinen von 90 bis 10 Gew.-%, bevorzugt von 50 bis 15 Gew.-%, an sulfenyliertem Acylurethan als Wirkstoff.

Die Wirkstoffkonzentration in anwendungsfertigen Zubereitungen können in größeren Bereichen variiert werden. Im allgemeinen liegen sie im Bereich von 0,03 bis 3 Gew.%, vorzugsweise im Bereich von 0,3 bis 1,5 Gew-%, bezogen auf die Gesamtmenge der Zubereitung.

## Herstellungsbeispiele

### Beispiel 1

(3[N(Dichlor-fluor-methylmercapto)-N-trifluormethyl]-amino-benzoyl-methylurethan)

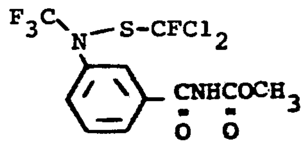

11,7 g 3-N(Dichlorfluormethylmercapto)-N-trifluormethylaminobenzoylisocyanat wurden bei Raumtemperatur in 100 ml Toluol gelöst und mit 10 ml Methanol versetzt. Die Temperatur steigt hierbei auf 33 °C an. Man engt im Vakuum ein und kristallisiert den Rückstand aus Waschbenzin um.

Fp. 104 °C, 11 g.

Die folgenden Beispiele 2 bis 5 werden analog Beispiel 1 ausgeführt.

| Beispiel | Produkt | Schmelzpunkt |
|---|---|---|
| 2 | 3-[N(Dichlor-fluor-methylmercapto)-N-trifluormethyl]aminobenzoyl-isopropyl-urethan | 112°C |
| 3 | 3-[N(Dichlor-fluor-methylmercapto)-N-trifluormethyl]aminobenzoyl-n-propyl-urethan | 92°C |
| 4 | 3-[N(Dichlor-fluor-methylmercapto)-N-trifluormethyl]aminobenzoyl-allyl-urethan | 95°C |
| 5 | 3-[N(Dichlor-fluor-methylmercapto)-N-trifluormethyl]aminobenzoyl-n-butyl-urethan | 95°C |

Beispiel 6

(2-[N-(Dichlor-fluor-methylmercapto)-N-trifluormethyl]aminobenzoyl-methyl-urethan)

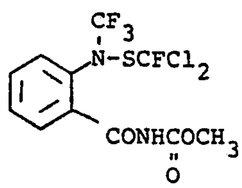

In 50 ml Methanol tropft man 14 g 2-N-(Dichlorfluormethylmercapto)-N-trifluormethylaminobenzoylisocyanat. Hierbei stellt man nur eine schwache Reaktion fest. Man rührt eine zeitlang bei 50 °C, engt im Vakuum ein und kristallisiert den Rückstand aus Essigester-Petrolether um. Man erhält 10 g des obigen Produktes vom Fp. 115 °C.

Die folgenden Beispiele 7 bis 15 werden analog Beispiel 6 ausgeführt:

| Beispiel | Produkt | Schmelzpunkt (Brechungsindex) |
|---|---|---|
| 7 | 2-[N(Dichlor-fluor-methylmercapto)-N-trifluormethyl]aminobenzoyl-isopropyl-urethan | 65°C |
| 8 | 2-[N(Dichlor-fluor-methylmercapto)-N-trifluormethyl]aminobenzoyl-allyl-urethan | (1.5263) |
| 9 | 2-[N(Dichlor-fluor-methylmercapto)-N-trifluormethyl]aminobenzoyl-n-butyl-urethan | 92°C |
| 10 | 2-[N(Dichlor-fluor-methylmercapto)-N-trifluormethyl]aminobenzoyl-benzyl-urethan | 111°C |
| 11 | 3-[N(Dichlor-fluor-methylmercapto)-N-trifluormethyl]amino-4-chlorbenzoyl-n-propyl-urethan | 107°C |

(Fortsetzung)

| Beispiel | Produkt | Schmelzpunkt (Brechungsindex) |
|---|---|---|
| 12 | 3-[N(Dichlor-fluor-methylmercapto)-N-trifluormethyl]amino-4-chlorbenzoyl-allyl-urethan | 91 °C |
| 13 | 4-[N(Dichlor-fluor-methylmercapto)-N-trifluormethyl]aminobenzoyl-methyl-urethan | 98 °C |
| 14 | 4-[N(Dichlor-fluor-methylmercapto)-N-trifluormethyl]aminobenzoyl-n-butyl-urethan | 131 °C |
| 15 | 4-[N(Dichlor-fluor-methylmercapto)-N-trifluormethyl]aminobenzoyl-benzyl-urethan | 118 °C |

## Anwendungsbeispiele

### Beispiel 16

Die Wirksamkeit der Substanz gemäß Beispiel 1 gegen Pilze wird im Vergleich zu N,N-Dimethyl-N'-phenyl-N'-(fluordichlormethylthio)sulfamid geprüft. Dazu werden die minimalen Hemm-Konzentrationen (MHK) wie folgt bestimmt:

Ein Nährmedium, das aus Agar, Bierwürze und Pepton hergestellt wird, wird mit dem erfindungsgemäßen Wirkstoff nach Beispiel 1 bzw. der Vergleichssubstanz in Konzentrationen von 0,5 mg/l bis 5 000 mg/l versetzt. Nach Erstarren des Agars erfolgt Kontamination mit Reinkulturen der in Tabelle 1 aufgeführten Testorganismen. Nach zweiwöchiger Lagerung bei 28 °C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt; sie ist in nachstehender Tabelle angegeben:

Tabelle

Angabe der MHK-Werte in mg/l bei der Einwirkung der unten angegebenen Wirkstoffe auf Pilze:

| Testorganismen | Substanz gem. Beispiel 1 | Vergleichssubstanz |
|---|---|---|
| Alternaria tenuis | 1,5 | 20 |
| Aspergillus niger | 5 | 50 |
| Chaetomium globosum | 3,5 | 20 |
| Cladosporium herbarum | 1,5 | 20 |
| Ceniophore cerebella | < 0,5 | 10 |
| Penicillium glaucum | 5 | 35 |
| Pullularia pullulans | 0,5 | 20 |
| Trichoderma viride | 15 | 5000 |

### Beispiel 17

Prüfung der Schimmelfestigkeit von Anstrichen:

Die Prüfung wird in Anlehnung an den Report 219 der Defense Standards Laboratories Maribyrnong/Australien wie folgt durchgeführt: Ein glatter Karton wird beidseitig mit dem zu prüfenden Produkt bestrichen und 8 Tage bei Raumtemperatur getrocknet. Zur Alterung wird ein Teil des Anstriches 24 Stunden in fließendem Wasser von 24 °C gewässert oder 8 Tage mit Frischluft von 40 bis 60 °C belüftet oder 110 Stunden einem trockenen Xenon-Test ausgesetzt. Von den so vorbereiteten Proben

werden Abschnitte von 5 × 5 cm einzeln in Petrischalen auf einen Traubenzucker-Nährboden gelegt und mit einer Sporensuspension der nachstehenden Pilze kontaminiert :

Aspergillus niger, Pullularia pullulans, Alternaria speciales, Penicillium citrinum, Stachybotrys atra, Paecilomyces varioti, Cladosporium herbarum, Aspergillus ustus, Coniophora cerebella.

Die kontaminierten Schalen werden bei 28 bis 30 °C und 90 bis 95 % rel. Luftfeuchtigkeit gelagert und nach 3 Wochen ausgewertet. Anstriche gelten als schimmelfest, wenn die Proben nach diesen Tests pilzfrei bleiben.

Nach dieser Testmethode wird eine handelsübliche Lackfarbe auf Alkydharzbasis nach Zusatz von 0,6 % 3-N-(Dichlorfluormethylthio)-N(trifluormethyl)/amino-benzoyl-methylcarbamat (bezogen auf Filmgewicht) auf Schimmelfestigkeit geprüft.

Ergebnis

Die Anstriche bleiben pilzfrei ; der Wirkstoff hat sich unter den Testbedingungen weder zersetzt noch verflüchtigt.

Beispiel 18

Zum Nachweis der Wirksamkeit gegen Pilze werden von weiteren erfindungsgemäßen Substanzen wie im Beispiel 3 angegeben minimale Hemm-Konzentrationen (MHK) bestimmt.

Angabe der MHK-Werte in mg/l bei der Einwirkung der unten angegebenen Wirkstoffe auf Pilze :

| Testorganismen | Wirkstoff nach Beispiel: | | | | | | |
|---|---|---|---|---|---|---|---|
| | 1 | 4 | 5 | 7 | 9 | 10 | 13 |
| Alternaria tenuis | 2 | 0,5 | 2 | 15 | 100 | 5 | 5 |
| Chaetomium globosum | 10 | 2 | 10 | 350 | 7,5 | 7,5 | 10 |
| Cladosporium herbarum | 2 | 50 | 5 | 20 | 50 | 35 | 10 |
| Coniophora cerebella | 0,5 | 0,5 | 0,5 | 0,5 | 0,5 | 0,5 | 0,5 |
| Pullularia pullulans | 0,5 | 1,5 | 5 | 350 | 200 | 75 | 5 |

**Ansprüche**

1. Neue sulfenylierte Acylurethane der Formel

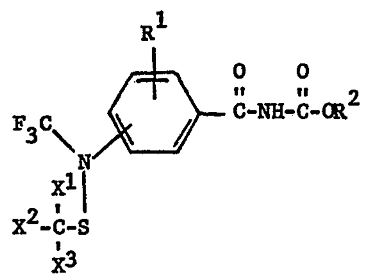

(I)

worin

$R^1$ Wasserstoff, Halogen, Nitro, gegebenenfalls durch Sauerstoff, Schwefel oder N-Alkyl unterbrochenes Alkyl, Alkoxy oder Halogenmethyl bedeutet,

$R^2$ gegebenenfalls durch Sauerstoff, Schwefel oder N-Alkyl unterbrochenes Alkyl, Alkenyl, Alkinyl, Cycloalkyl oder Aralkyl bedeutet,

$X^1$, $X^2$ und $X^3$ gleich oder verschieden sind und Halogen bedeuten.

2. Neue sulfenylierte Acylurethane nach Anspruch 1 der Formel

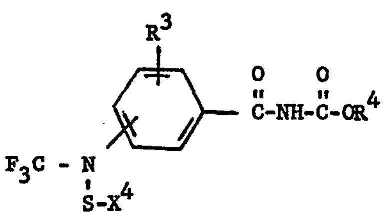

worin

$R^3$ Wasserstoff, Chlor, Nitro, Niederalkyl, Niederalkoxy oder Trifluormethyl bedeutet,

$R^4$ Niederalkyl, Niederalkenyl oder Benzyl bedeutet und

$X^4$ Trifluormethyl, Trichlormethyl, Fluor-dichlormethyl oder Difluor-chlormethyl bedeutet.

3. Verfahren zur Herstellung von sulfenylierten Acylurethanen, dadurch gekennzeichnet, daß man Acylisocyanate der Formel

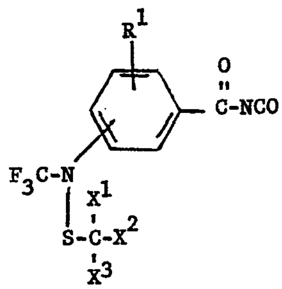

(III)

worin

$R^1$, $X^1$, $X^2$ und $X^3$ die oben angegebene Bedeutung haben,

mit einer Hydroxyverbindung der Formel

$$R^2—OH \qquad (IV)$$

worin

$R^2$ die oben angegebene Bedeutung hat,

in Gegenwart eines Verdünnungsmittels umsetzt.

4. Mikrobizides Mittel, enthaltend Verbindungen der Formel

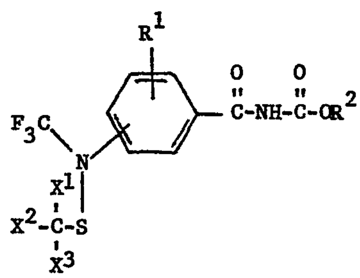

(I)

worin

$R^1$ Wasserstoff, Halogen, Nitro, gegebenenfalls durch Sauerstoff, Schwefel oder N-Alkyl unterbrochenes Alkyl, Alkoxy oder Halogenmethyl bedeutet,

$R^2$ gegebenenfalls durch Sauerstoff, Schwefel oder N-Alkyl unterbrochenes Alkyl, Alkenyl, Alkinyl, Cycloalkyl oder Aralkyl bedeutet,

$X^1$, $X^2$ und $X^3$ gleich oder verschieden sind und Halogen bedeuten.

5. Verwendung von mikrobiziden Mitteln nach Anspruch 4 zum Schutz technischer Materialien.

**Claims**

1. New sulphenylated acylurethanes of the formula

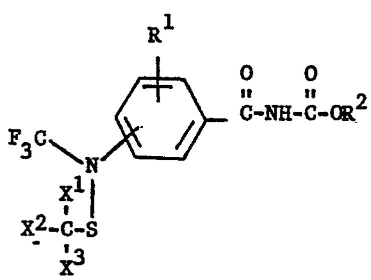

(I)

wherein

$R^1$ denotes hydrogen ; halogen ; nitro ; alkyl which is optionally interrupted by oxygen, sulphur or N-alkyl ; alkoxy or halogenomethyl,

$R^2$ denotes alkyl which is optionally interrupted by oxygen, sulphur or N-alkyl ; alkenyl ; alkinyl ; cycloalkyl or aralkyl

$X^1$, $X^2$ and $X^3$ are identical or different and denote halogen.

2. New sulphenylated acylurethanes according to Claim 1 of the formula

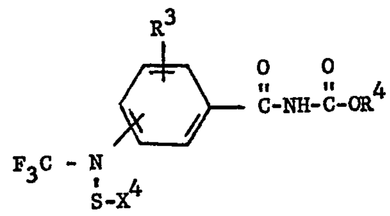

wherein

$R^3$ denotes hydrogen, chlorine, nitro, lower alkyl, lower alkoxy or trifluoromethyl,

$R^4$ denotes lower alkyl, lower alkenyl or benzyl and

$X^4$ denotes trifluoromethyl, trichloromethyl, fluorodichloromethyl or difluoro-chloromethyl.

3. Process for the preparation of sulphenylated acylurethanes, characterised in that acyl isocyanates of the formula

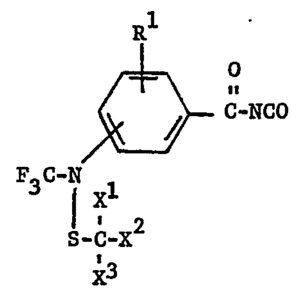

(III)

wherein

$R^1$, $X^1$, $X^2$ and $X^3$ have the meaning indicated above, are reacted with a hydroxy compound of the formula

$$R^2\text{—}OH \qquad (IV)$$

wherein

$R^2$ has the meaning indicated above,

in the presence of a diluent.

4. Microbicidal agent containing compounds of the formula

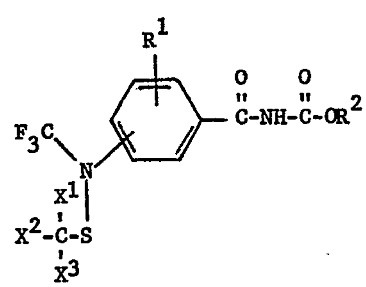

(I)

wherein

$R^1$ denotes hydrogen ; halogen ; nitro ; alkyl which is optionally interrupted by oxygen, sulphur or N-alkyl ; alkoxy or halogenomethyl,

$R^2$ denotes alkyl which is optionally interrupted by oxygen, sulphur or N-alkyl ; alkenyl ; alkinyl ; cycloalkyl or aralkyl,

$X^1$, $X^2$ und $X^3$ are identical or different and denote halogen.

5. Use of microbicidal agents according to Claim 4 for protecting industrial materials.

**Revendications**

1. Nouveaux acyluréthannes sulfénylés de formule

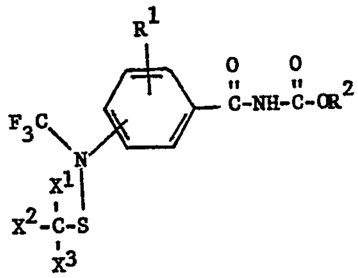

(I)

dans laquelle

$R^1$ représente l'hydrogène, un halogène, un groupe nitro, un groupe alkyle éventuellement interrompu par l'oxygène, le soufre ou N-alkyle, un groupe alcoxy ou halogénométhyle,

$R^2$ représente un groupe alkyle éventuellement interrompu par l'oxygène, le soufre ou N-alkyle, un groupe alcényle, alcynyle, cycloalkyle ou arylalkyle,

$X^1$, $X^2$ ou $X^3$ sont identiques ou différents et représentent un halogène.

2. Nouveaux acyluréthannes sulfénylés selon la revendication 1 de formule

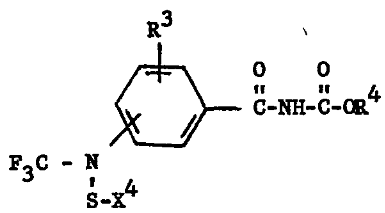

dans laquelle

$R^3$ représente l'hydrogène, le chlore ou un groupe nitro, alkyle inférieur, alcoxy inférieur ou trifluorométhyle,

$R^4$ représente un groupe alkyle inférieur, alcényle inférieur ou benzyle et

$X^4$ représente un groupe trifluorométhyle, trichlorométhyle, fluorodichlorométhyle ou difluorochlorométhyle.

3. Procédé pour la fabrication d'acyluréthannes sulfénylés caractérisé en ce que l'on fait réagir des isocyanates d'acyles de formule

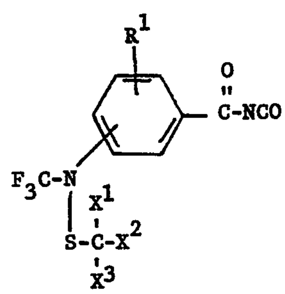

(III)

dans laquelle

$R^1$, $X^1$, $X^2$ et $X^3$ ont la signification indiquée ci-dessus, avec un composé hydroxy de formule

$$R^2\text{—}OH \quad (IV)$$

dans laquelle

$R^2$ a la signification indiquée ci-dessus,

en présence d'un agent diluant.

4. Agent microbicide contenant des composés de formule

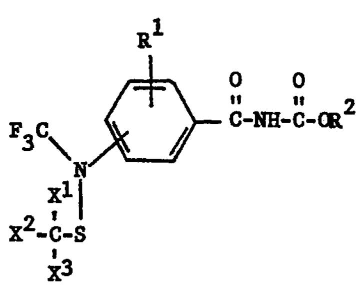

(I)

dans laquelle

$R^1$ représente l'hydrogène ou un halogène ou un groupe nitro, un groupe alkyle éventuellement interrompu par l'oxygène, le soufre ou un groupe N-alkyle, un groupe alcoxy ou halogénométhyle,

$R^2$ représente un groupe alkyle éventuellement interrompu par l'oxygène, le soufre ou N-alkyle ; un groupe alcényle, alcynyle, cycloalkyle ou arylalkyle,

$X^1$, $X^2$ et $X^3$ sont identiques ou différents et représentent un halogène.

5. Utilisation d'agents microbicides selon la revendication 4 pour la protection de matériaux techniques.